Europäisches Patentamt

European Patent Office

Office européen des brevets

(19)

(11) Veröffentlichungsnummer: **0 311 557**
**B1**

(12)  # EUROPÄISCHE PATENTSCHRIFT

(45) Veröffentlichungstag der Patentschrift: **23.01.91**

(51) Int. Cl.⁵: **D 01 G 9/08,** B 01 D 46/26

(21) Anmeldenummer: **88810618.4**

(22) Anmeldetag: **13.09.88**

(54) **Trennverfahren und Vorrichtung zur Durchführung desselben.**

(30) Priorität: **09.10.87 CH 3954/87**

(43) Veröffentlichungstag der Anmeldung:
**12.04.89 Patentblatt 89/15**

(45) Bekanntmachung des Hinweises auf die
Patenterteilung:
**23.01.91 Patentblatt 91/04**

(84) Benannte Vertragsstaaten:
**DE FR GB IT**

(56) Entgegenhaltungen:
**DE-A-3 006 831**
**DE-A-3 131 174**
**DE-A-3 231 944**
**GB-A- 893 564**

(73) Patentinhaber: **Scheinhütte, Hans-Jürgen**
**Paulistrasse 84**
**CH-8834 Schindellegi (CH)**

(72) Erfinder: **Scheinhütte, Hans-Jürgen**
**Paulistrasse 84**
**CH-8834 Schindellegi (CH)**

Courier Press, Leamington Spa, England.

EP 0 311 557 B1

# Beschreibung

Die Erfindung betrifft ein Verfahren und eine Vorrichtung zum Trennen von Flocken, insbesondere Baumwollflocken, die zum Teil Verunreinigungen enthalten, die so stark an den Flocken haften, dass as nicht möglich ist, sie mit den üblichen Methoden zu entfernen, die aber das Gewicht der Flokken und insbesondere ihren Quotienten aus Masse und Luftwiderstand vergrössern. Diese Eigenschaft nutzt die Erfindung aus und trennt somit saubere von verunreinigten Flocken.

Bei der Aufbereitung von Baumwolle zum Kardieren ist es üblich, dieselbe mit einem Luftstrom als Transportmedium sog. Reinigern und Abscheidern zuzuführen. Die Hauptaufgabe dieser sog. Putzerei ist es, die Flocken zu öffnen und Schmutz und Schalenteile zu entfernen (sidie GB—A—893 564).

Dazu besitzen die Reiniger üblicherweise eine schnell rotierende Trommel, die mit einer sog. Garnitur, d.h. mit Metallzähnen überzogen ist. Die Baumwolle verhängt sich an diesen Zähnen, wobei schwerere Verunreinigungen insbesondere Schalenteile durch die Fliehkraft von der Trommel weg nach aussen gezogen werden. Dort werden sie von sog. Messern abgestreift und so ausgeschieden. Bei gewissen Verunreinigungen, insbesondere bei Bändern, Geweben und Plastikfolien versagt dieses Reinigungsverfahren, da sich diese Stoffe so intensiv in der Garnitur verhaken, dass sie nicht oder nur zum Teil abgestreift werden. Ein Teil verbleibt häufig in der gereinigten Baumwolle und ist mit dieser so innig vermischt, dass er später beim Kardieren weiter zerkleinert und schliesslich der Spinnmaschine zugeführt wird. Hier oder auch erste beim Weben treten dann Fadenbrüche auf, die zu teueren Stillstandszeiten führen. Manchmal wirken sich die Fremdstoffe sogar erst als Fehler im fertigen Gewebe aus und verursachen hohe Kosten, da sie sich infolge der Zerkleinerung über viele Quadratmeter verteilen.

Es besteht daher seit langem in der Textilindustrie ein Interesse an einer Einrichtung, die diese Art von Verunreinigungen entfernt oder wenigstens reduziert.

Zum Teil erfüllt diese Aufgabe eine Vorrichtung, die in DE—A—3006831 beschrieben ist.

Hier wird ein Flockenstrom durch eine Rohrleitung mit einer Umlenkung geführt. Die konvexe Seite der Umlenkung hat mehrere öffnungen bzw. ist rostartig ausgeführt, so daß schwere Teile durch die Fliehkraft durch diese Öffnungen in einen Sammelraum gelangen, während leichte der Rohrleitung folgen. Da auch ein erheblicher Luftstrom, der Flocken mit sich führt, durch die öffnungen bläst, ist es erforderlich, diese durch einen Abströmkanal wieder zu entfernen. Eine Drosselklappe im Abströmkanal ermöglicht es, den Gegendruck im Sammelraum optimal einzustellen, so daß eine Beruhigungszone entsteht, und die schweren Teile sich am Boden absetzen können.

Die Fremdfasern und ähnliche Verunreinigungen befinden sich im Luftstrom nun aber nicht nur getrennt von den Baumwollflocken sondern sind zu einem erheblichen Teil mit diesen so verfilzt, daß sie auch durch die erwähnten Fliehkräfte nicht zu separieren sind. Man muß also solche verunreinigten Flocken gesamthaft ausscheiden; d.h. schwere und leichte Flocken voneinander trennen. Dies geschieht bei der geschilderten Vorrichtung zwar innerhalb der Umlenkung zum Teil. Die schweren Flocken prallen dann aber auf die Wandelemente zwischen öffnungen, die deshalb auch als Messer oder Abstreifer bezeichnet sind. Dadurch sind nun die trennenden dynamischen Kräft nicht mehr wirksam. Sofern diese Flocken überhaupt in den Sammelraum gelangen, werden sie dort nur durch die Schwerkraft separiert. Dies bedeutet in der Praxis eine 10- bis 50-fache Reduktion der Trennkräfte.

Das der Erfindung zugrunde liegende Verfahren vermeidet dagegen jede Behinderung der durch Fliehkräfte getrennten Flocken, da die Anwendung des Coanda-Effektes es ermöglicht, einem Luftstrom eine Krümmung aufzuzwingen, ohne daß dazu begrenzende Elemente auf der konvexen Seite erforderlich sind.

Die Funktion der Vorrichtung sei anhand der Zeichnungen erklärt. Es zeigen:

Abb. 1 den prinzipiellen Aufbau der Vorrichtung

Abb. 2 die Kombination mit einer Siebtrommel

Im Inneren der Kammer 4 herrscht z.B. ein leichter Unterdruck.

Der Luftstrom mit den Flocken tritt der 1 ein. Die seitliche Begrenzung 2 weist eine auf die Strömungs- u. Massenverhältnisse abgestimmte Krümmung auf. Durch entsprechende Ausbildung der Austrittsöffnung 3 legt sich der Luftstrom durch den Coanda-Effekt an die gekrümmte seitliche Begrenzung 2 an und folgt ihr, wodurch Fliehkräfte entstehen. Bei passender Dimensionierung vermögen verunreinigte Flocken, die einen grösseren Quotienten aus Masse und Luftwiderstand aufweisen, dem Luftstrom daher nicht zu folgen und scheiden sich bei 4 ab, während reine Flocken mit entsprechend kleinerem Quotienten mit dem Luftstrom das Gerät bei 5 verlassen.

Das sich durch Verwirbelungen auch mal saubere Flocken aus dem Luftstrom lösen, wird bei 7 Frischluft eingelassen, die zu einer Gegenströmung im Teilstück 6 führt und diese Flocken durch die Injektorwirkung des Luftstromes diesem wieder zufügt. Die verunreinigten Flocken durchfliegen mit kaum verminderter Geschwindigkeit das Teilstück 6 und sammeln sich bei 8. Es ist zweckmässig, der Vorrichtung bei 1 einen rechteckigen Querschnitt zu geben, mit der längeren Seite senkrecht zur Zeichnungsebene.

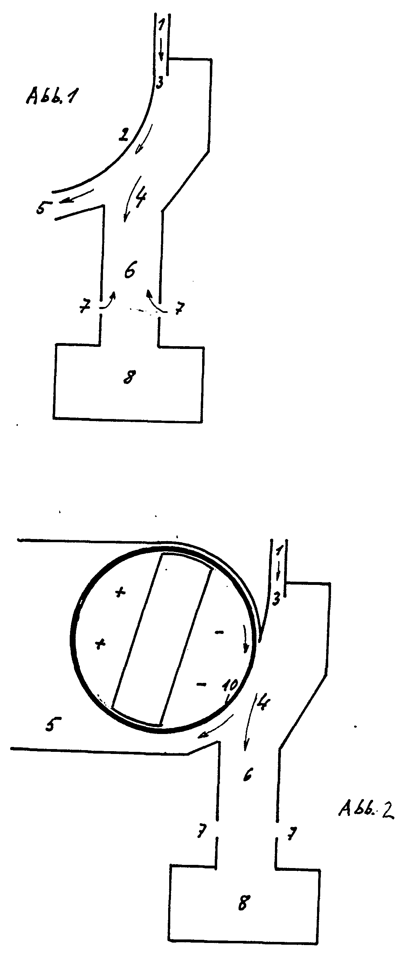

Den Coanda-Effekt kann man unterstützen, wenn man durch die erwähnte gekrümmte Begrenzung 2 Luft absaugt. Eine solche Ausführung zeigt Abb. 2. Hier besteht die Begrenzung 2 teilweise aus einer Siebtrommel 10, die sich in Richtung des Luftstromes dreht und in derem Inneren teilweise ein Unterdruck herrscht, der die Flocken ansaugt. Um sie später wieder von der Trommeloberfläche zu entfernen, kann z.B. in einem anderen Bereich der Trommel ein entsprechend höherer Druck herrschen. (In der Zeichnung durch+u.—dargestellt.)

**Patentansprüche**

1. Verfahren zur Trennung von Flocken mit unterschiedlichen Quotienten aus Masse und Luftwiderstand, dadurch gekennzeichnet, daß die Flocken durch einen Luftstrom transportiert werden, daß dem Luftstrom ein gekrümmter Verlauf aufgezwungen wird, daß dazu weder Schaufeln noch begrenzende Elemente auf der konvexen Seiten des Luftstromes eingesetzt werden und daß Vorkehrungen getroffen werden, die Luftgeschwindigkeit und/oder den gekrümmten Verlauf und/oder zusätzlich zugeführte Luft so einzustellen, daß die Flocken mit dem größeren Quotienten den Luftstrom auf der konvexen Seite verlassen, während die Flocken mit dem kleineren zunächst in ihm verbleiben.

2. Vorrichtung zur Durchführung des Verfahrens nach Anspruch 1, dadurch gekennzeichnet, daß einer Kammer zum Sammeln der schwereren Flocken und Verunreinigungen vorgesehen ist, daß in ihrem Inneren im Wesentlichen nur eine feststehende, gekrümmte Führungswand (2) angeordnet ist, und daß eine Austrittsöffnung (3) vorhanden ist, die den erwähnten Luftstrom auf die konvexe Seite dieser Führungswand leitet.

3. Vorrichtung nach Anspruch 2, dadurch gekennzeichnet, daß die erwähnte feststehende Führungswand (2) mindestens teilweise durch eine drehbare Siebtrommel (10) ersetzt ist.

**Revendications**

1. Procédé pour séparer des flocons dont le quotient de la masse à la résistance aérodynamique diffère, caractérisé en ce que les flocons sont transportés par un courant d'air, que l'on oblige ce courant d'air à suivre une trajectoire courbe en n'utilisant à cette fin ni des aubes ni des éléments limitateurs sur le côté convexe du courant d'air, et que l'on prend les mesures nécessaires pour régler la vitesse de l'air, et/ou la trajectoire courbe et/ou une amenée d'air additionnelle de manière à ce que les flocons ayant un quotient comparativement grand quittent le courant d'air du côté convexe, tandis que les flocons ayant un quotient comparativement petit restent tout d'abord dans celui-ci.

2. Dispositif pour la mise en oeuvre du procédé selon la revendication 1, caractérisé en ce qu'il comporte une chambre pour collecter les flocons les plus lourds ainsi que les impuretés, que son intérieur ne comporte essentiellement qu'une paroi directrice (2) courbe et fixe, et qu'il existe une ouverture de sortie (3) dirigeant ledit courant d'air vers le côté convexe de cette paroi.

3. Dispositif selon la revendication 2, caractérisé en ce que ladite paroi fixe (2) est au moins partiellement remplacée par un tambour rotatif perforé (10).

**Claims**

1. Method for the separation of flocks with different quotients of the mass divided by the aerodynamic drag, characterized in that the flocks are conveyed by an air flow, that this air flow is forced to follow a curved trajectory, that this is achieved without the use of blades or limiting elements on the convex side of the air flow, and that measures are taken in order to regulate the air speed and/or the curved trajectory and/or the input of an additional amount of air in such a way that the flocks with the larger quotient leave the air flow on the convex side whilst the flocks with the smaller quoatient provisionally remain in it.

2. Apparatus for performing the method of claim 1, characterized in that it comprises a chamber for gathering the heavier flocks and impurities, and which contains essentially only a fixed, curved directional wall (2), and that there exists an exit aperture (3) which directs the air stream towards the convex side of said directional wall.

3. Apparatus according to claim 2, characterized in that said fixed directional wall (2) is replaced at least in part by a rotatable foraminous drum (10).

Abb.1

Abb.2

1